(19) Europäisches Patentamt
European Patent Office
Office européen des brevets

(11) **EP 4 723 659 A1**

(12) **EUROPEAN PATENT APPLICATION**
published in accordance with Art. 153(4) EPC

(43) Date of publication:
**08.04.2026 Bulletin 2026/15**

(21) Application number: **24810710.4**

(22) Date of filing: **28.03.2024**

(51) International Patent Classification (IPC):
**H04N 23/60** (2023.01)     **H04N 5/222** (2006.01)

(52) Cooperative Patent Classification (CPC):
**H04N 5/222; H04N 23/60**

(86) International application number:
**PCT/JP2024/012563**

(87) International publication number:
**WO 2024/241702 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.05.2023 JP 2023085973**

(71) Applicant: **Canon Kabushiki Kaisha
Tokyo, 146-8501 (JP)**

(72) Inventors:
• **NAKAMURA Koki
Tokyo 146-8501 (JP)**
• **KITAMURA Kazuya
Tokyo 146-8501 (JP)**

(74) Representative: **TBK
Bavariaring 4-6
80336 München (DE)**

(54) **INFORMATION PROCESSING DEVICE AND IMAGING DEVICE**

(57)     [SUMMARY]

[PROBLEMS] To obtain image data with reduced image quality unevenness in an background image area, regardless of the arrangement of a background display and an image pickup apparatus.

[SOLUTION MEANS] An information processing apparatus 105 acquires an input image obtained by capturing an image of an object OBJ and a background image displayed on a background display LD using an image pickup apparatus, distinguishes between an object area and a background image area in the input image, acquires arrangement information on at least one of an angle or a distance between the background display and the image pickup apparatus, and performs image processing on the background image area according to the arrangement information.

FIG. 1

**Description**

FIELD OF ART

The present invention relates to an information processing apparatus configured to perform information processing relating to imaging.

BACKGROUND ART

Virtual production as one of the imaging methods for movies and television is a method for displaying a background image on a background display that is larger than an object and capturing it together with the object. However, an LED, which is a display element that is primarily used in the background display, has a viewing angle characteristic. Therefore, unless an image pickup apparatus is located opposite to the background display and captures an image, image quality unevenness (luminance unevenness) may occur in the background image area of image data obtained by imaging.
Patent Document 1 discloses a method of calculating an angle between an LED display and an image pickup apparatus from position information of the image pickup apparatus, and correcting the luminance of the LED display using a luminance correction value according to the angle.

PRIOR ART DOCUMENT

PATENT DOCUMENT

Patent Document 1: US Patent Application Publication No. 2022/0014728

SUMMARY OF THE INVENTION

PROBLEMS TO BE SOLVED BY THE INVENTION

The method disclosed in Patent Document 1 changes the luminance of the LED display according to the angle between it and a single image pickup apparatus. Therefore, in the imaging using that single image pickup apparatus, image data is obtained in which image quality unevenness in the background image area is reduced. However, in a case where an image pickup apparatus separate from this image pickup apparatus captures an image simultaneously at a different angle, image data may be obtained in which image quality unevenness in the background image area is not reduced.
The present invention can provide an information processing apparatus, an image pickup apparatus, and the like, each of which can provide image data with reduced image quality unevenness in the background image area, regardless of the arrangement of the background display and the image pickup apparatus.

MEANS TO SOLVE THE PROBLEM

An information processing apparatus according to one aspect of the present invention includes an acquiring means for acquiring an input image obtained by capturing an image of an object and a background image displayed on a background display using an image pickup apparatus, a distinguishing means for distinguishing between an object area and a background image area in the input image, and a processing means for acquiring arrangement information on at least one of an angle or a distance between the background display and the image pickup apparatus, and performing image processing on the background image area according to the arrangement information. An image pickup apparatus having the above information processing apparatus also constitutes another aspect of the present invention.
An information processing method according to another aspect of the present invention includes acquiring an input image obtained by capturing an image of an object and a background image displayed on a background display using an image pickup apparatus, distinguishing between an object area and a background image area in the input image, acquiring arrangement information on at least one of an angle and a distance between the background display and the image pickup apparatus, and performing image processing for the background image area according to the arrangement information. A program that causes a computer to execute processing according to the above information processing method also constitutes another aspect of the present invention.

EFFECT OF THE INVENTION

The present invention can obtain image data with reduced image quality unevenness in the background image area, regardless of the arrangement of the background display and the image pickup apparatus.

BRIEF DESCRIPTION OF THE DRAWINGS

Fig. 1 is a block diagram illustrating the configuration of an image pickup apparatus according to this embodiment.

Fig. 2 illustrates parts of light receiving surfaces on image sensors.

Fig. 3 is a flowchart illustrating processing of calculating distance information in this embodiment.

Fig. 4 is a diagram illustrating a correlation calculation.

Fig. 5 is another diagram illustrating a correlation calculation.

Fig. 6 is a flowchart illustrating processing according to a first embodiment.

Fig. 7 illustrates an imaging state and an object area and an LED display area in image data in the first embodiment.

Fig. 8 illustrates the division of image data in the first embodiment.

Fig. 9 illustrates a correction target block and its adjacent blocks in the first embodiment.

Fig. 10 is a schematic diagram illustrating an imaging position and two adjacent blocks on adjacent LED displays in the image data in the first embodiment.

Fig. 11 is a flowchart illustrating processing according to a second embodiment.

EMBODIMENTS FOR PRACTICING THE INVENTION

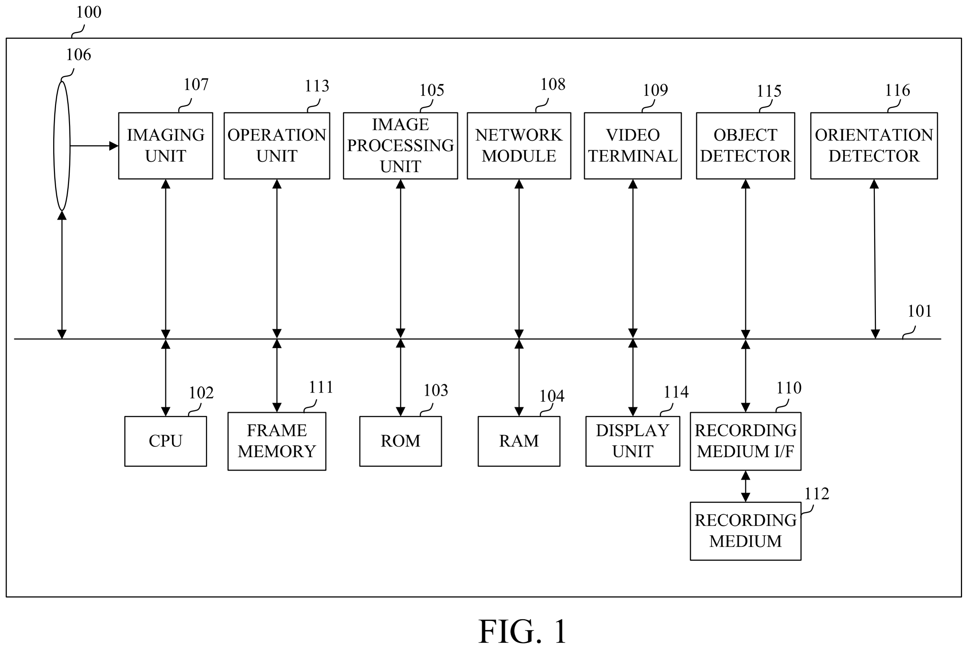

Embodiments of the present invention will now be described with reference to the drawings. First, an image pickup apparatus (digital camera) that includes an information processing apparatus that executes the processing of first and second embodiments described below will be described. Fig. 1 illustrates the configuration of an image pickup apparatus 100. The image pickup apparatus 100 acquires an image through imaging, and processes and records it.
A CPU 102, ROM 103, RAM 104, image processing unit 105, lens unit 106, imaging unit 107, network module 108, video terminal 109, recording medium I/F 110, display unit 114, and object detector 115 are connected to an internal bus 101. Each component connected to the internal bus 101 can communicate data with each other via an internal bus 101.
The lens unit 106 includes an optical system including a zoom lens, a focus lens, and an aperture (stop) mechanism, and a motor that drives the optical system. An optical image formed by the lens unit 106 is converted into an image signal as an analog electrical signal (i.e., captured) by an image sensor, such as a CCD sensor or CMOS sensor, included in the imaging unit 107. The imaging unit 107 also includes an A/D converter that converts the imaging signal output from the image sensor into a digital signal (image data). The image sensor is an imaging-surface phase-difference sensor, and details of which will be described later.
The CPU 102 serves as a computer, controls each component in the image pickup apparatus 100 using the RAM 104 as a work memory in accordance with a program stored in the ROM 103.
The ROM 103 is a nonvolatile memory that records programs and a variety of parameters for operating the CPU 102. The RAM 104 is a volatile memory. A frame memory 111 is a memory that temporarily stores image data and allows image data to be read out when needed. Using the frame memory 111 can provide processing such as combining images obtained by capturing images at different timings and cutting out specific areas from captured images.
The image processing unit 105, as an information processing apparatus, performs various image processing on the image data from the imaging unit 107 or image data stored in the frame memory 111 or recording medium 112, under the control of the CPU 102. The image processing performed by the image processing unit 105 includes pixel interpolation, encoding, compression, decoding, enlargement/reduction (resizing), noise reduction, color conversion, and other processing for image data. The image processing unit 105 corrects performance variations among a plurality of pixels of the image sensor, defective pixels, white balance, luminance, and distortion and peripheral light amount loss caused by the lens characteristic. The image processing unit 105 generates distance information (described below) and corrects a luminance value of image data according to the angle and distance between a background display (described below) and the image pickup apparatus 100. The image processing unit 105 may be configured as a dedicated image processing computer for image processing, or the CPU 102 may have a function of the image processing unit 105.

The CPU 102 controls each motor of the lens unit 106 based on the lens control calculation result obtained from the image processing unit 105 to perform optical zoom, focusing, and aperture adjustment. The CPU 102 may also perform image stabilization by moving a lens that constitutes part of the optical system in a direction orthogonal to the optical axis in accordance with camera shake detected by an orientation detector 116, which will be described later.

An operation unit 113 accepts an operation by a user and outputs an instruction corresponding to the operation to the CPU 102 and the image processing unit 105. The operation unit 113 has an operation member such as a switch, a dial, and a button. The operation member includes a power switch, a mode switching dial, and a release button. When the user half-presses the release button, it causes the CPU 102 to start an imaging preparation operation such as autofocus (AF) and auto-exposure (AE) control. When the user fully presses the release button, it causes the CPU 102 to start an imaging operation to obtain image data for recording. The operation unit 113 may be a touch sensor provided on the display unit 114.

The display unit 114, which serves as display means, displays an image processed by the image processing unit 105, a setting menu, etc. The display unit 114 has a display device such as a Liquid Crystal Display (LCD) or an organic electroluminescence (EL) display. The display unit 114 may also have a touch sensor described above.

The CPU 102 generates text information and icons to inform the user of the setting status and the like of the image pickup apparatus 100, as well as an image of a setting menus for making a variety of settings for the image pickup apparatus 100, and displays them on the display unit 114, superimposed on an image processed by the image processing unit 105.

The video terminal 109 is a terminal for a video interface such as Serial Digital Interface (SDI), High Definition Multimedia Interface (HDMI) (registered trademark), or DisplayPort (registered trademark). The CPU 102 can output video (image data) to an external monitor or the like via the video terminal 109.

The network module 108 is an interface for inputting and outputting image data and audio signals. The CPU 102 communicates with external devices via the network module 108, such as via the Internet, and can transmit and receive not only image data and audio signals, but also control signals such as commands. The network module 108 may be of either a wireless or wired type.

The recording medium 112 is a hard disk drive (HDD) or solid state drive (SSD) capable of recording image data and various setting data, and is detachably attached to the recording medium I/F 110.

The object detector 115 detects an object using artificial intelligence, such as deep learning using a neural network. In object detection using deep learning, the CPU 102 transmits a program, a network structure, a weight parameter, and the like stored in the ROM 103 to the object detector 115. Examples of network structures include Single Shot Multibox Detector (SSD) and You Only Look Once (YOLO). The object detector 115 detects an object from image data based on a variety of parameters obtained from the CPU 102 and sends the processing result to the RAM 104.

The orientation detector 116 detects the orientation and shake of the image pickup apparatus 100 using an angular velocity sensor, an acceleration sensor, etc. Thereby, camera shake due to tilt or hand shake of the image pickup apparatus 100 can be detected.

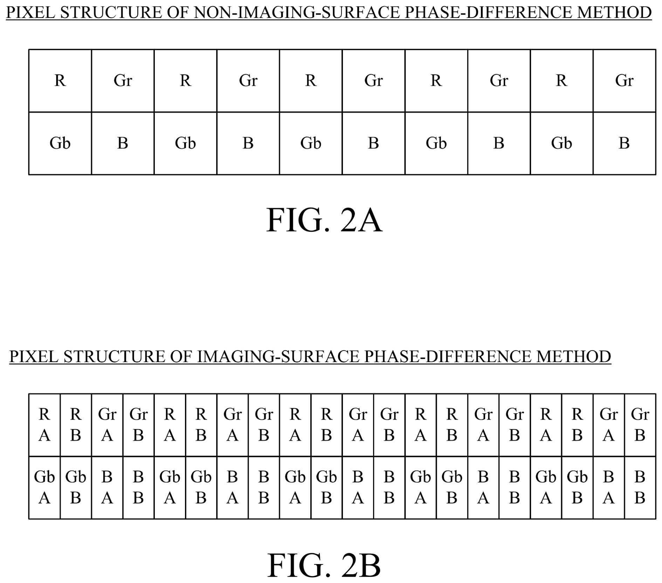

Fig. 2(A) schematically illustrates a part of an image sensor in which red (R), blue (B), and green (Gb, Gr) pixels are arranged in a Bayer array. As illustrated in Fig. 2(B), each pixel has two photodiodes A and B as photoelectric conversion elements, and each of the two photodiodes A and B has an unillustrated single microlens. Due to this structure, the two photodiodes A and B receive light from two different areas in the exit pupil of the lens unit 106 and output A and B signals. The imaging unit 107 generates a pair of image signals (A and B image signals) for phase difference detection by combining the A and B signals output from each of the multiple pixels on the image sensor. An imaging signal for obtaining image data is generated by adding the A and B image signals.

In addition to outputting A and B signals from each pixel, the imaging unit 107 can also output a value obtained by averaging the A and B signals from multiple pixels that are close to each other. Outputting an averaged value reduces the time for reading signals from the imaging unit 107 and the bandwidth of the internal bus 101.

The CPU 102 performs a correlation operation for the pair of image signals to calculate a phase difference between them, and calculates defocus amount information from the phase difference. The defocus amount indicates a defocus degree relative to an in-focus state of the lens unit 106. The CPU 102 determines that the defocus amount is in-focus in a case where it is within a predetermined range including 0, and determines that a positive or negative defocus amount indicates a front-focus state or a back-focus state, respectively. The CPU 102 performs imaging-surface phase-difference AF by controlling a motor that drives the focus lens in the lens unit 106 according to the positive or negative defocus amount. The CPU 102 also calculates the reliability of the calculated phase difference. The CPU 102 calculates a distance to an object using the parallax between the pair of image signals and the optical information of the lens unit 106, using the principle of triangulation.

While Fig. 2(B) illustrates an example where two photodiodes are provided per pixel, the number of photodiodes per pixel may be three or more. The image sensor may include a plurality of pixels with different aperture positions, and these multiple pixels may be treated as one pixel for focus detection. Thus, the image sensor may be configured to obtain a pair of image signals for phase difference detection.

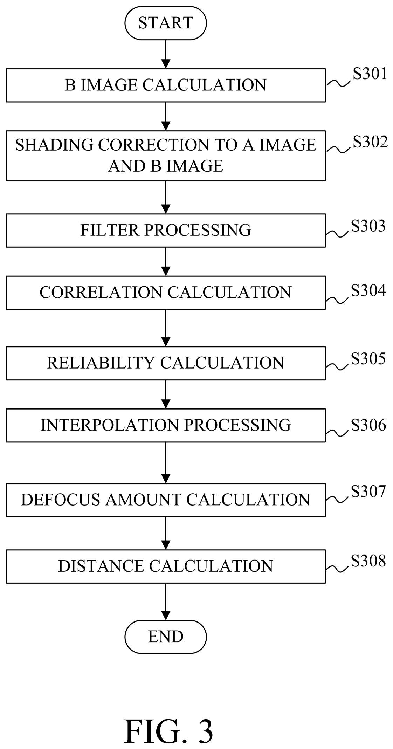

Next, the information generation processing performed by the image processing unit 105 will be described using the flowcharts of Figs. 3 to 5. The image processing unit 105 functions as an acquiring means, a determination means, and a processing means.

The flowchart of Fig. 3 illustrates distance calculating processing that the image processing unit 105 executes according to a program in response to the imaging start in the imaging unit 107. First, in step S301, the image processing unit 105 calculates (acquires) the B image signal by determining a difference between the imaging signal (image A signal + image B signal) output from the imaging unit 107 and the A image signal. In this step, the A image signal and the B image signal may be acquired from the imaging unit 107, respectively. In this case, a signal obtained by adding the A image signal and the B image signal can be acquired as the imaging signal. In a case where two lens units and two image sensors are provided, such as in a stereo camera, the A image signal may be acquired from one of the two image sensors, and the B image signal may be acquired from the other.

Next, in step S302, the image processing unit 105 corrects shading caused by optical factors for the A image signal and the B image signal.

Next, in step S303, the image processing unit 105 performs filter processing for each of the A and B image signals. This filter processing is, for example, high-pass filter processing using a Finite Impulse Response (FIR) filter. The following will discuss a case where the A and B image signals that have been high-pass filtered are used, but filter processing may also be performed using a band-pass filter or low-pass filter with different filter coefficients.

Next, in step S304, the image processing unit 105 divides each of the A and B image signals that have been filtered in step S303 into minute blocks and performs a correlation calculation for each divided block. There are no particular restrictions on the size or shape of the minute blocks, and adjacent blocks may partially overlap each other.

A description will now be given of the correlation calculations for the A and B image signals. The signal sequence of the A image signal at the pixel of interest is defined as A image signal sequences $E(1)$ to $E(m)$, and the signal sequence of the B image signal at the pixel of interest is defined as B image signal sequences $F(1)$ to $F(m)$. While the B image signal sequences $F(1)$ to $F(m)$ are shifted from the A image signal sequences $E(1)$ to $E(m)$, a correlation amount $C(k)$ between these paired image signal sequences at a shift amount k is calculated using the following equation (1):

$$C(k) = \sum |E(n) - F(n + k)| \qquad (1)$$

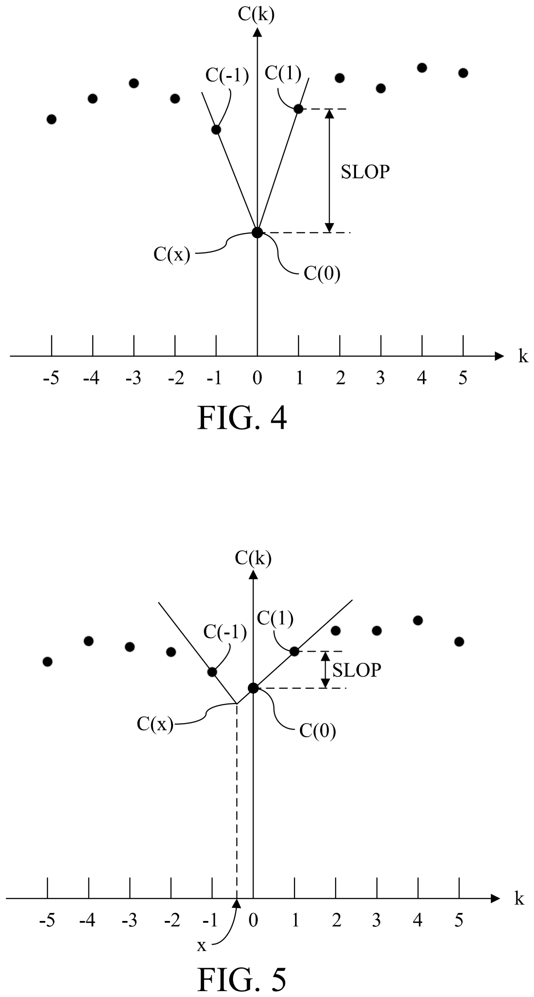

In equation (1), the $\Sigma$ operation refers to the calculation of the sum with respect to n. In the $\Sigma$ operation, the range of n and n+k is limited to 1 to m. The shift amount k is an integer value and represents a relative pixel shift amount measured in units of the detection pitch (pixel arrangement pitch) of the paired image signal sequences. Fig. 4 illustrates a calculation result of equation (1) in a case where the correlation between the paired image signal sequences is high under ideal noise-free conditions.

As illustrated in Fig. 4, the correlation amount $C(k)$ is minimized at a shift amount where the correlation between the paired image signal sequences is high (k = kj = 0). k at which the discrete correlation amount $C(k)$ is minimized is denoted as kj. The three-point interpolation processing illustrated in equations (2) to (4) calculates a pixel shift (phase difference) x that provides the minimum value $C(x)$ for consecutive correlation amounts. The pixel shift amount x is a real value measured in units of pixels.

$$x = kj + \frac{D}{SLOP} \qquad (2)$$

$$D = \frac{\{C(kj-1) - C(kj+1)\}}{2} \qquad (3)$$

$$SLOP = MAX\{C(kj + 1) - C(kj), C(kj - 1) - C(kj)\} \qquad (4)$$

SLOP in equation (4) represents the slope of change in the minimum and local minimum correlation amount and its neighboring correlation amounts. In Fig. 4, as a specific example, let:

$$C(kj) = C(0) = 1000$$

$$C(kj-1) = C(-1) = 1700$$

$$C(kj+1) = C(1) = 1830$$

In this example, kj = 0. From equations (2) to (4), the following equations hold:

$$SLOP = 830$$

$$x = -0.078 \text{ pixels.}$$

In an in-focus state, the ideal value of the pixel shift amount x between paired image signal sequences is 0.00.

On the other hand, Fig. 5 illustrates a calculation result in a case where equation (1) is applied to a small block containing noise. As illustrated in Fig. 5, the correlation between paired image signal sequences decreases due to the influence of randomly distributed noise. The minimum value of the correlation amount C(k) is larger than the minimum value illustrated in Fig. 4, and the curve of the correlation amount becomes generally flatter (the absolute value of the difference between the maximum and minimum values reduces).

As a specific example, in Fig. 5, let:

$$C(kj) = C(0) = 1300$$

$$C(kj-1) = C(-1) = 1480$$

$$C(kj+1) = C(1) = 1800$$

In this example, kj = 0. From equations (2) to (4), the following equations hold:

$$SLOP = 500$$

$$x = -0.32 \text{ pixels}$$

Compared to a calculation result in the noise-free state, as illustrated in Fig. 4, the pixel shift amount x is farther from the ideal value.

In a case where the correlation between the paired image signal sequences is low, a change amount in the correlation amount C(k) is small, the curve of the correlation amount is generally flat, and a SLOP value is small. Similarly, in a case where the object image has low contrast, the correlation between the paired image signal sequences is low and the curve of the correlation amount is flat. Based on this property, the reliability of the calculated pixel shift amount x can be determined from the SLOP value. That is, in a case where the SLOP value is large, it can be determined that the correlation between the paired image signal sequences is high, and in a case where the SLOP value is small, it can be determined that no significant correlation is obtained between the paired image signal sequences. Since this embodiment uses equation (1) for a correlation calculation, the correlation amount C(k) is smallest and locally minimal at the shift amount k at which the correlation between the paired image signal sequences is highest. An alternative method may use a correlation calculation method in which the correlation amount C(k) is maximized and locally maximal at the shift amount k at which the correlation between the paired image signal sequences is highest.

Next, in step S305, the image processing unit 105 calculates the reliability of the calculated pixel shift amount x. The reliability can be defined by C(kj), which indicates the coincidence degree between the pair of image signals calculated in step S304, and the SLOP value.

Next, in step S306, the image processing unit 105 performs interpolation processing. Although the correlation calculation has been successfully performed in step S304, there are cases where the pixel shift amount x of the pixel of interest cannot be used because the reliability calculated in step S305 is low. In such cases, the pixel shift amount of the pixel of interest must be obtained by interpolation using the pixel shift amounts calculated for the pixels surrounding the pixel of interest. The interpolation method may use a method of applying a median filter to the pixel shift amount calculated for the surrounding pixel, or a method of reducing the pixel shift amount data and then enlarging it again. Alternatively, color data may be extracted from the imaging signal and the pixel shift amount may be interpolated using that color data.

Next, in step S307, the image processing unit 105 calculates the defocus amount by referring to the pixel shift amount x calculated in step S304 or obtained by the interpolation in step S306. The defocus amount (DEF) can be calculated using the following equation (5):

$$DEF = P \cdot x \qquad (5)$$

In equation (5), P is a conversion coefficient determined by a detection pitch and a distance between the projection centers of the two viewpoints in the pair of parallax images (image A signal and image B signal) (a distance between the center of gravity of the image sensor generating the image A signal and the center of gravity of the image sensor generating the image B signal). The conversion coefficient is expressed in units of mm/pixel.

Next, in step S308, the image processing unit 105 calculates the distance from the defocus amount calculated in step S307. Where Da is a distance to an object, Db is a focal position of the lens unit 106, and F is a focal length, the following equation (6) approximately holds:

$$\frac{1}{Db} - \frac{1}{Da} = \frac{1}{F} \qquad (6)$$

Therefore, the distance Da to the object is given as:

$$Da = \frac{Db \cdot F}{F - Db} \qquad (7)$$

If Db is set to Db0 when DEF = 0,
then equation (7) becomes as follows:

$$Da' = \frac{(Db0 - DEF) \cdot F}{F - (Db0 - DEF)} \qquad (8)$$

An absolute distance Da' to an object can be calculated. A relative distance Da-Da' can be calculated from equations (7) and (8) as follows:

$$Da - Da' = \frac{DEF \cdot F^2}{(F - Db0)^2 + DEF \cdot (F - Db0)} \qquad (9)$$

can thus be obtained.

The processing illustrated in Fig. 3 above can provide the pixel shift amount, defocus amount, and distance to the object from the A and B image signals.

The pixel shift amount and defocus amount thus acquired change according to the distance from the image pickup apparatus 100. Therefore, all of the pixel shift amount, defocus amount, and distance represent information on the distance from the image pickup apparatus 100. In the following description, information on a distance will be referred to as distance information. The information on the distance is not limited to a distance itself, but may also be information that can be converted into or associated with distance.

FIRST EMBODIMENT

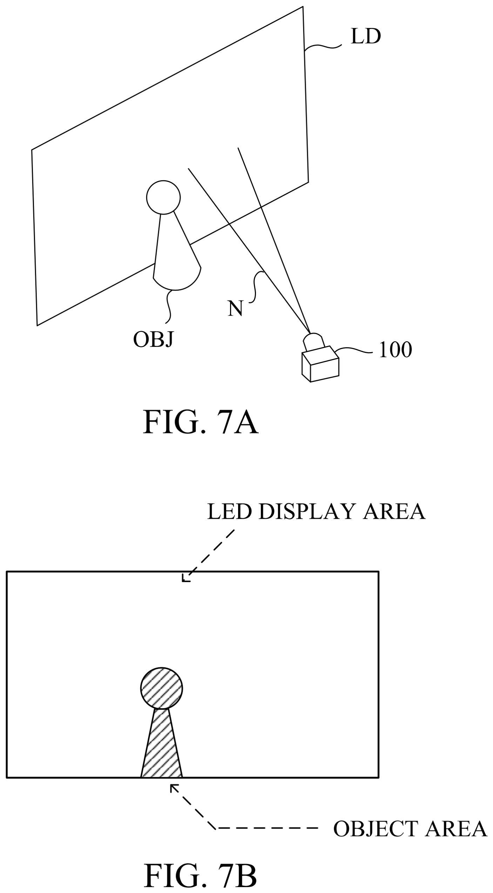

Next, the first embodiment will be described. Fig. 7(a) illustrates the image pickup apparatus 100 capturing an image of an object OBJ positioned in front of an LED display LD serving as a background display. The LED display LD has a large number of LEDs arranged in a two-dimensional direction as display elements, and displays a background image corresponding to a video signal supplied from a video supply apparatus (not illustrated). The image data obtained by imaging illustrates the object OBJ against the background image.

In Fig. 7(a), the image pickup apparatus 100 captures the object OBJ and the LED display LS from a direction different from a direction of a normal N (direction facing) the flat LED display LD. The background display is not limited to a flat surface, and may be a curved or spherical surface. In a case where an angle between the imaging direction of the image pickup apparatus 100 and the display surface of the LED display LD is significantly different from 90°, the viewing angle characteristic of the LED display LD reduces the luminance of the light incident on the image pickup apparatus 100 from the LED display LD. As a result, the image quality unevenness (luminance unevenness) due to this angle occurs in the background image area of the image data captured by the image pickup apparatus 100. Hence, the luminance value correction on the image data as image processing may be performed to reduce this image quality unevenness.

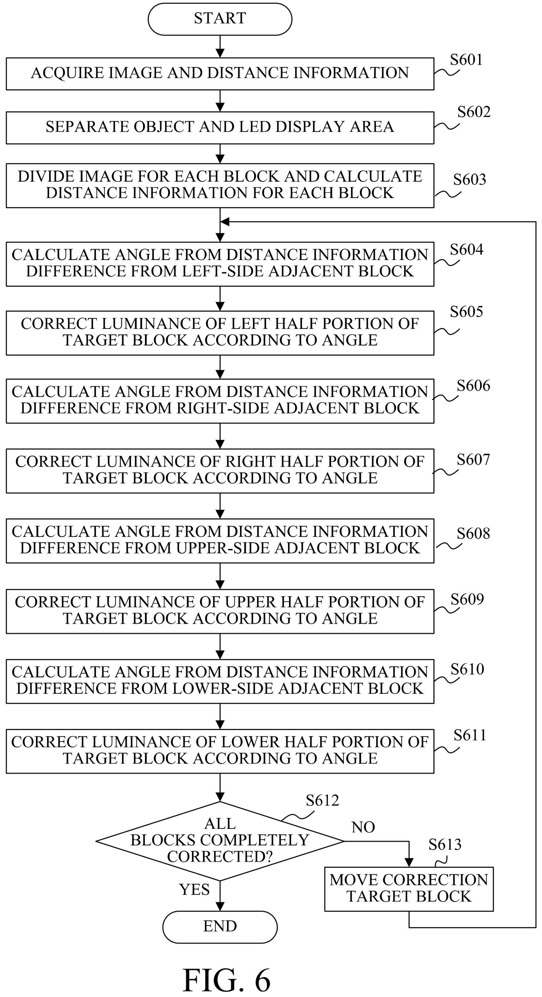

A flowchart in Fig. 6 illustrates the processing executed by the image processing unit 105 in the image pickup apparatus 100 in the first embodiment according to a program.

First, in step S601, the image processing unit 105 acquires image data as an input image obtained by capturing an image of the object OBJ and the LED display LD, as well as distance information from the object OBJ to the LED display LD, and stores these in the frame memory 111.

Next, in step S602, the image processing unit 105 reads out the image data and distance information from the frame memory 111. From the distance information, the image processing unit 105 determines and separates an object area in which the object in the image data appears, as illustrated in Fig. 7(b), and an LED display area (background image area) in which the LED display LD appears. More specifically, a threshold value is set for the distance information, and an area of the image data having distance information equal to or greater than the threshold value is determined to be an LED display area, and an area having distance information less than the threshold value is determined to be an object area. The threshold value may be set arbitrarily by the user through operation of the operation unit 113, or may be set by the CPU 102 in accordance with the aperture value, focus position, etc. of the lens unit 106. The image processing unit 105 adds flags to the object area and the LED display area of the image data to distinguish them, and stores the image data in the frame memory 111.

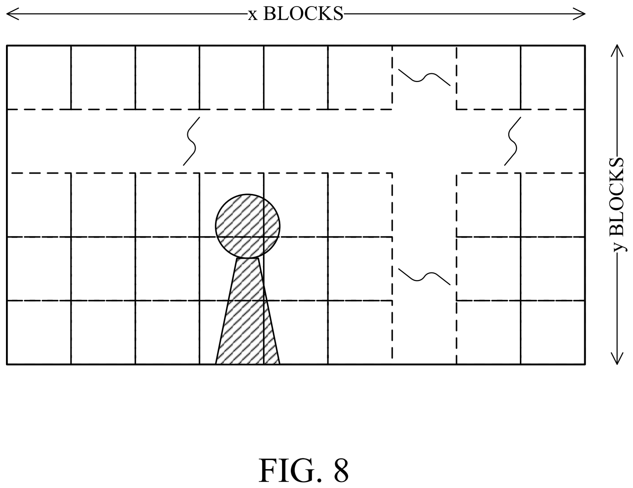

Next, in step S603, the image processing unit 105 reads the image data and distance information from the frame memory 111. As illustrated in Fig. 8, the image processing unit 105 divides the image data in the horizontal direction into a plurality of x blocks and in the vertical direction into a plurality of y blocks. Each block may be square or have another shape.

The image processing unit 105 calculates the average value of the distance information for each divided block. At this time, the image processing unit 105 references the flag added to the image data in step S602 and calculates the average value of the distance information for only the LED display area; distance information for the object area is not included in the calculation of the average value. The image processing unit 105 stores the average value of the distance information for each block in the frame memory 111.

Next, in step S604, the image processing unit 105 reads from the frame memory 111 the image data and the average value of distance information for a correction target block and the image data and the average value of distance information for a left-side adjacent block of the correction target block. For example, the upper left block of all blocks is initially set as the correction target block, and the block is moved one by one in the raster direction in step S613 (described later). The image processing unit 105 calculates, for each correction target block, an angle between the area on the display surface of the LED display LD corresponding to the correction target block and the imaging direction (imaging optical axis) of the image pickup apparatus 100, as arrangement information indicating the arrangement relationship between the LED display LD and the image pickup apparatus 100. Then, luminance value is corrected by changing a luminance value for each correction target block according to this angle. The angle as used herein may refer to the angle itself, or a value that can be converted into or associated with the angle, or any other information on the angle. In the following explanation, this angle will be referred to as an angle between the LED display LD (the area corresponding to the block) and the image pickup apparatus 100.

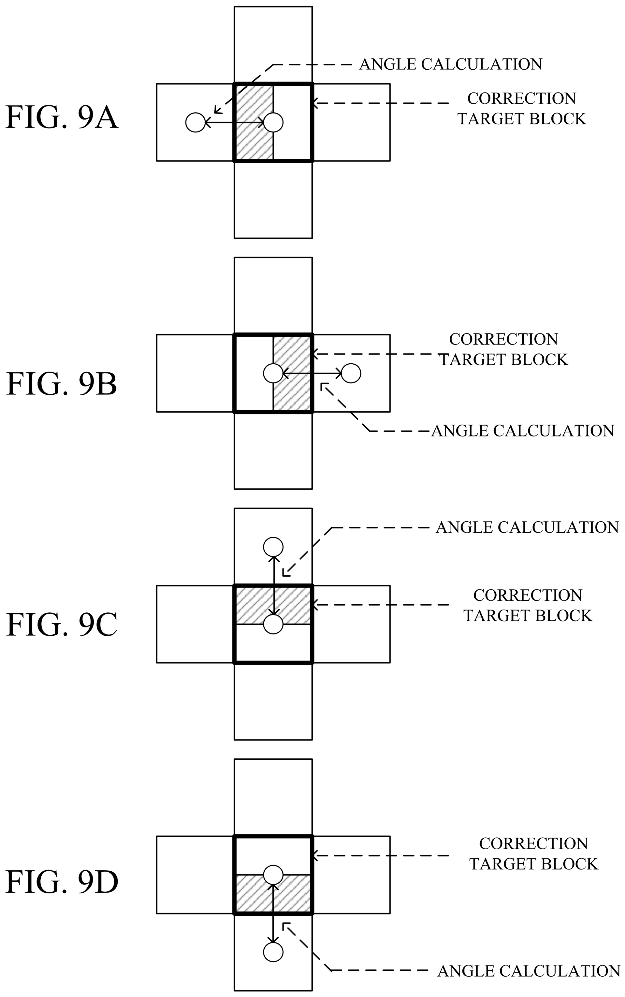

First, as illustrated in Fig. 9(a), the image processing unit 105 calculates the angle between the image pickup apparatus 100 and the area on the LED display LD corresponding to the left half portion of the correction target block (the adjacent block side) using the average value of the distance information for the correction target block and the left-side adjacent block.

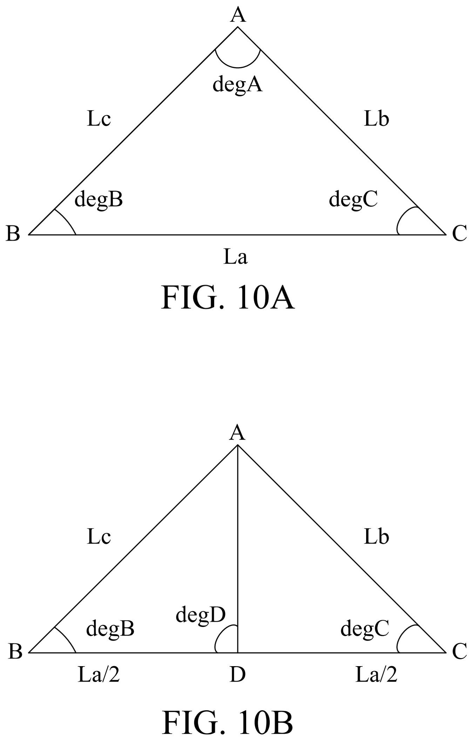

A method for calculating the angle between the LED display LD and the image pickup apparatus 100 will be described with reference to Figs. 10(a) to 10(c). Fig. 10(a) illustrates a positional relationship between the image pickup apparatus 100 and the LED display in the horizontal plane. In Fig. 10(a), a vertex A represents an imaging position of the image pickup apparatus 100, a vertex B represents a point on the LED display that is captured at the center point of the correction target block, and a vertex C represents a point on the LED display that is captured at the center point of the left-side adjacent block. A distance Lc from the vertex A to the vertex B and a distance Lb from the vertex A to the vertex C are known from the average value of the distance information.

The vertex A is a vertex that connects the center points of two adjacent blocks in a case where the image data obtained by imaging at the angle of view of the lens unit 106 is divided in the horizontal direction into x blocks and the imaging position of the image pickup apparatus 100. Therefore, an angle degA of vertex A has a value obtained by dividing the angle of view of the lens unit 106 by x. Using the lengths of the two sides of triangle ABC (distances Lc and Lb) and the angle degA, the image processing unit 105 can calculate the distance La from the vertex B to the vertex C using the cosine theorem illustrated in the following equation (10):

$$cos(degA) = \frac{Lb^2 + Lc^2 - La^2}{2 \times Lb \times Lc} \qquad (10)$$

Once the lengths of the three sides of triangle ABC (distances La, Lb, and Lc) are determined, an angle degB of the vertex B and an angle degC of the vertex C can be determined using the sine theorem illustrated in equation (11) below:

$$\frac{La}{sin(degA)} = \frac{Lb}{sin(degB)} = \frac{Lc}{sin(degC)} \qquad (11)$$

Next, as illustrated in Fig. 10(b), the triangle ABD is set, with a vertex D being the point that bisects the distance La between the vertices B and C. Since the lengths of the two sides of the triangle ABD (distances Lc and La/2) and the angle degB of the vertex B are known, an angle degD of the vertex D can be determined using the cosine theorem of equation (10) and the sine theorem of equation (11).

Thus, the angle degD between the image pickup apparatus 100 and the area of the LED display LD corresponding to the left half portion of the correction target block can be obtained using the average value of the distance information between the center point of the correction target block and the center point of the left-side adjacent block.

The angle between the LED display LD and the image pickup apparatus 100 can be calculated as follows using the correction target block and its right-side adjacent block as illustrated in Fig. 9(b). The vertex C in Figs. 10(a) and 10(b) is defined as a point on the LED display that is projected at the center point of the correction target block, and the vertex B is defined as a point on the LED display that is projected at the center point of the right-side adjacent block. In calculating the angle using vertically adjacent blocks as illustrated in Figs. 9(c) and 9(d), since the image data is divided into y parts in the vertical direction, the angle of view of the lens unit 106 divided by y can be set as the angle degA of the vertex A.

Next, in step S605, the image processing unit 105 multiplies the luminance value of the image data in the left half portion of the correction target block, hatched in Fig. 9(a), by the luminance correction value corresponding to the angle calculated in step S604. A lookup table (LUT) is stored in advance in the ROM 103, which uses an angle as an input value and a luminance correction value as a luminance correction parameter (image processing parameter) as an output value. The image processing unit 105 reads from the LUT a luminance correction value corresponding to the angle calculated in step S604. The LUT stores luminance correction values for angles from 0° to 180°. The luminance correction value is multiplied by 1 when the angle is 90°, and decreases toward 0 as the angle moves away from 90°. This luminance correction value changes (increases) the luminance value of the image data in the opposite direction to the viewing angle characteristic of the LED display LD, in which the LED luminance decreases as the observation position moves away from 90°. The image processing unit 105 may also calculate and acquire the luminance correction value corresponding to the angle using a calculation equation and the like. The image processing unit 105 stores the image data multiplied by the luminance correction value in the frame memory 111.

Next, in step S606, the image processing unit 105 reads from the frame memory 111 the image data and the average value of distance information of the correction target block and the image data and the average value of distance information of the right-side adjacent block of the correction target block. As illustrated in Fig. 9(b), the image processing unit 105 calculates an angle between the image pickup apparatus 100 and an area on the LED display LD corresponding to the right half portion of the correction target block, using the average values of the distance information for the correction target block and its right-side adjacent block.

Next, in step S607, the image processing unit 105 multiplies the luminance value of the image data for the right half portion of the correction target block, hatched in Fig. 9(b), by a luminance correction value corresponding to the angle calculated in step S606. This luminance correction value is the same as that used in step S605. The image processing unit 105 stores the image data multiplied by the luminance correction value in the frame memory 111.

Next, in step S608, the image processing unit 105 reads from the frame memory 111 the image data and the average value of distance information for the correction target block and the image data and the average value of distance information for the upper-side adjacent block of the correction target block. As illustrated in Fig. 9(c), the image processing unit 105 calculates an angle between the image pickup apparatus 100 and an area on the LED display LD corresponding to the upper half portion of the correction target block, using the average value of the distance information for each of the correction target block and its upper-side adjacent block.

Next, in step S609, the image processing unit 105 multiplies the luminance value of the image data for the upper half portion of the correction target block, hatched in Fig. 9(C), by a luminance correction value corresponding to the angle calculated in step S608. This luminance correction value may be the same as that used in steps S605 and S607, or, if the vertical viewing angle characteristic of the LED display LD differs from the horizontal viewing angle characteristic of the LED display LD, a value that corrects the luminance value in the opposite direction to the vertical viewing angle characteristic may be used. The image processing unit 105 stores the image data multiplied by the luminance correction value in the frame memory 111.

Next, in step S610, the image processing unit 105 reads from the frame memory 111 the image data and the average value of distance information for the correction target block and the image data and the average value of distance information for the lower-side adjacent block of the correction target block. As illustrated in Fig. 9(d), the image processing unit 105 calculates the angle between the image pickup apparatus 100 and an area on the LED display LD corresponding to the lower half portion of the correction target block, using the average value of the distance information for the correction target block and its lower-side adjacent block.

Next, in step S611, the image processing unit 105 multiplies the luminance value of the image data for the lower half portion of the correction target block, hatched in Fig. 9(d), by a luminance correction value corresponding to the angle calculated in step S610. This luminance correction value is the same as that used in step S609. The image processing unit 105 stores the image data multiplied by the luminance correction value in the frame memory 111.

Next, in step S612, the image processing unit 105 determines whether the luminance value correction in steps S604 to S611 has been performed for all of the horizontal x × vertical y blocks. In a case where the correction has been performed for all blocks, this flow ends. In a case where there are any blocks that have not yet been corrected, the processing of step S613 is performed.

In step S613, the image processing unit 105 moves the correction target block in the raster direction. Then, the flow returns to the processing of step S604.

By performing the above processing, the luminance value of the background image area in the image data (input image) can be corrected according to the angle between the LED display LD and the image pickup apparatus 100. Therefore, image data (output image) with reduced image quality unevenness in the background image area can be obtained. Moreover, since the emission luminance of the LED display LD itself is not changed, even in a case where a plurality of image pickup apparatuses located at different angles simultaneously capture images, image data with reduced image quality unevenness in the background image area can be obtained for each image pickup apparatus.

This embodiment has discussed a case where the angle between the LED display and the image pickup apparatus is calculated using the average value of the distance information for each block, but may use other distance information, such as distance information for the center position of each block, instead of the average value.

SECOND EMBODIMENT

Next, a second embodiment will be described. The second embodiment corrects image quality unevenness due to the distance between the LED display and the image pickup apparatus 100, rather than image quality unevenness due to the angle between the LED display and the image pickup apparatus 100.

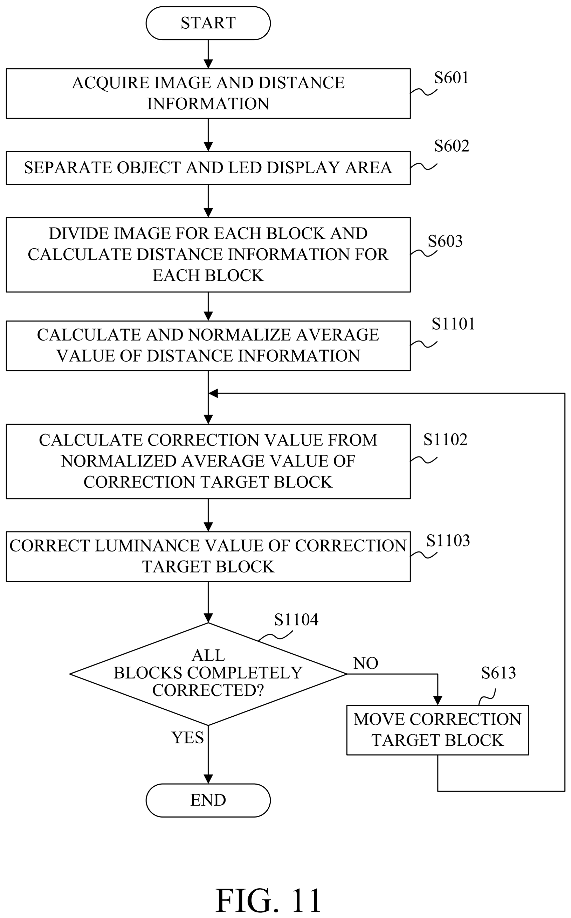

A flowchart in Fig. 11 illustrates the processing that the image processing unit 105 executes in accordance with a program in the second embodiment. The processing from step S601 to step S603 is the same as the processing of the steps designated by the same reference numerals in the first embodiment (Fig. 6).

After step S603 and in step S1101, the image processing unit 105 reads from the frame memory 111 the average value of distance information for each divided block of the image data (input image). At this time, the image processing unit 105 normalizes the average value of distance information for each block, assuming that the average value of distance information for all blocks is 1. The image processing unit 105 stores the normalized average value of the distance information for each block in the frame memory 111 as arrangement information for the LED display LD and the image pickup apparatus 100.

Next, in step S1102, the image processing unit 105 reads from the frame memory 111 the image data of the correction target block and the normalized average value of the distance information. The image processing unit 105 calculates a luminance correction value from the normalized average value of the distance information. That is, it calculates a luminance correction value corresponding to the distance. In this embodiment, the luminance of the image data is inversely proportional to the square of the distance between the LED display and the image pickup apparatus 100. Hence, the image processing unit 105 sets the luminance correction value corresponding to the distance to the reciprocal of the square of the normalized average value of the distance information.

Next, in step S1103, the image processing unit 105 multiplies a luminance value of the image data of the correction target block by a luminance correction value corresponding to the distance calculated in step S1102. The image processing unit 105 stores the image data multiplied by the luminance correction value in the frame memory 111.

Next, in step S1104, the image processing unit 105 determines whether the luminance value correction in steps S1102 and S1103 has been performed for all horizontal x × vertical y blocks, and in a case where correction has been performed for all blocks, the flow ends. In a case where there are any blocks that have not yet been corrected, the processing of step S613 is performed. The processing of step S613 is the same as the processing of the step designated by the same reference numeral in the first embodiment (Fig. 6), but in this embodiment, the flow returns to the processing of step S1102.

By performing the above processing, the luminance can be corrected for the background image area in the image data (input image) according to the distance of the image pickup apparatus 100 from the LED display. Therefore, image data (output image) can be acquired with image quality unevenness in the background image area reduced. Moreover, since the light emission luminance of the LED display LD itself is not changed, even in a case where a plurality of image pickup apparatuses located at different distances from each other simultaneously capture images, image data with reduced image quality unevenness in the background image area can be obtained for each image pickup apparatus.

In the first and second embodiments, in a case where the LED display is composed of a plurality of color LEDs, for example LEDs of three colors, R (red), G (green), and B (blue), a luminance correction value may be prepared for angle or distance for each of the R, G, and B colors of the image data and the luminance value may be corrected for each color.

In addition, rather than acquiring a luminance correction value and performing luminance value correction for each correction target block, a map of luminance correction values for all blocks may be prepared and the luminance value may be corrected using the luminance correction value obtained by performing two-dimensional filter processing such as low-pass filter processing for this map.

In the first and second embodiments, distance information may not be acquired through the processing illustrated in Fig. 3 using an image sensor, but may be acquired using a distance measuring apparatus that is provided in the image pickup apparatus 100 separately from the image sensor and configured to measure a distance to an object. Examples of the distance measuring apparatus may include radar, Light Detection and Ranging (LiDAR), and the like.

In the first and second embodiments, an LED display is used as the background display. However, it is not limited to the LED display, and even in a case where a background display is used that employs a variety of display elements, such as a liquid crystal element or an organic EL element, which have a viewing angle characteristic in which the luminance changes according to the angle and distance, a luminance value can be corrected in accordance with at least one of the angle or distance.

In the above embodiments, the image processing unit 105 performs image processing to correct the luminance value of image data in accordance with the angle and distance between the background display LD and the image pickup apparatus 100. However, other image processing in accordance with the angle and distance may also be performed. For example, when the background display LD is a Vertical Alignment (VA) panel or the like, the displayed color is likely to be distorted according to the angle between the background display LD and the image pickup apparatus 100, so color correction processing may be performed in accordance with the angle.

The image processing unit 105 may add as metadata the above map of luminance correction values to image data as an input image, and output this image data to the outside from an output unit such as the network module 108, the video terminal 109, and the recording medium 112. Thereby, the external device can perform luminance value correction of the image data by referring to the map of luminance correction values.

In the first and second embodiments, the image processing unit 105 as an information processing apparatus is built into the image pickup apparatus 100. However, a personal computer having similar functions as those of the image processing unit 105 (operating according to a program that achieves the similar functions) may be provided as an information processing apparatus separate from the image pickup apparatus.

(OTHER EMBODIMENTS)

The present invention can supply a program that implements one or more functions of the above embodiments to a system or apparatus via a network or a storage medium, and can be implemented by one or more processors in a computer of the system or apparatus configured to read and execute the program. It can also be implemented by a circuit (*e.g.,* an ASIC) that implements one or more functions.

The embodiments described above are merely representative examples, and various modifications and alterations are possible to each embodiment when implementing the present invention.

**Claims**

1. An information processing apparatus comprising:

   an acquiring means for acquiring an input image obtained by capturing an image of an object and a background image displayed on a background display using an image pickup apparatus;
   a distinguishing means for distinguishing between an object area and a background image area in the input image; and

a processing means for acquiring arrangement information on at least one of an angle or a distance between the background display and the image pickup apparatus, and performing image processing on the background image area according to the arrangement information.

2. The information processing apparatus according to claim 1, wherein the image processing includes processing for changing a luminance value of the background image area.

3. The information processing apparatus according to claim 2, wherein in a case where a luminance of incident light from the background display to the image pickup apparatus changes according to at least one of the angle or the distance, the image processing includes processing for changing the luminance value of the background image area in a direction opposite to a change in the luminance of the incident light.

4. The information processing apparatus according to any one of claims 1 to 3, wherein the processing means previously stores or calculates an image processing parameter corresponding to the arrangement information, and performs the image processing using the image processing parameter.

5. The information processing apparatus according to any one of claims 1 to 4, wherein the distinguishing means distinguishes between the object area and the background image area using information on distances from the image pickup apparatus to the object and the background display.

6. The information processing apparatus according to any one of claims 1 to 5, wherein the processing means:

   divides the background image area into a plurality of blocks,
   acquires the arrangement information for each block, and
   performs the image processing.

7. The information processing apparatus according to claim 6, wherein the processing means:

   acquires the arrangement information for each of a target block and an adjacent block of the target block among the plurality of blocks, and
   performs the image processing on a portion on a side of the adjacent block of the target block according to the arrangement information on each of the target block and the adjacent block.

8. The information processing apparatus according to any one of claims 1 to 7, wherein the processing means acquires information on the angle using information on the distance from the image pickup apparatus to the background display.

9. The information processing apparatus according to any one of claims 1 to 8, wherein in a case where the background image has a plurality of colors, the image processing is performed on the input image for each color.

10. The information processing apparatus according to any one of claims 1 to 9, wherein the processing means:

    adds an image processing parameter corresponding to the arrangement information to the input image, and
    outputs a result to outside.

11. The information processing apparatus according to any one of claims 1 to 10, wherein each of a plurality of pixels in an image sensor provided in the image pickup apparatus includes a plurality of photoelectric conversion elements that receive light from different areas in a pupil of the optical system, and
    wherein the processing unit acquires the arrangement information from a phase difference between a pair of image signals generated using signals output from the plurality of photoelectric conversion elements in the plurality of pixels.

12. An image pickup apparatus comprising:

    the information processing apparatus according to any one of claims 1 to 11; and
    an image sensor.

13. An information processing method comprising:

    acquiring an input image obtained by capturing an image of an object and a background image displayed on a background display using an image pickup apparatus;
distinguishing between an object area and a background image area in the input image;
acquiring arrangement information on at least one of an angle or a distance between the background display and the image pickup apparatus; and
performing image processing on the background image area according to the arrangement information.

14. A program that causes a computer to execute processing in the information processing method according to claim 13.

FIG. 1

PIXEL STRUCTURE OF NON-IMAGING-SURFACE PHASE-DIFFERENCE METHOD

| R | Gr | R | Gr | R | Gr | R | Gr | R | Gr |
|---|----|---|----|---|----|---|----|---|----|
| Gb | B | Gb | B | Gb | B | Gb | B | Gb | B |

# FIG. 2A

PIXEL STRUCTURE OF IMAGING-SURFACE PHASE-DIFFERENCE METHOD

| R A | R B | Gr A | Gr B | R A | R B | Gr A | Gr B | R A | R B | Gr A | Gr B | R A | R B | Gr A | Gr B | R A | R B | Gr A | Gr B |
|---|---|---|---|---|---|---|---|---|---|---|---|---|---|---|---|---|---|---|---|
| Gb A | Gb B | B A | B B | Gb A | Gb B | B A | B B | Gb A | Gb B | B A | B B | Gb A | Gb B | B A | B B | Gb A | Gb B | B A | B B |

# FIG. 2B

START

B IMAGE CALCULATION — S301

SHADING CORRECTION TO A IMAGE AND B IMAGE — S302

FILTER PROCESSING — S303

CORRELATION CALCULATION — S304

RELIABILITY CALCULATION — S305

INTERPOLATION PROCESSING — S306

DEFOCUS AMOUNT CALCULATION — S307

DISTANCE CALCULATION — S308

END

FIG. 3

## FIG. 4

## FIG. 5

START

ACQUIRE IMAGE AND DISTANCE INFORMATION — S601

SEPARATE OBJECT AND LED DISPLAY AREA — S602

DIVIDE IMAGE FOR EACH BLOCK AND CALCULATE DISTANCE INFORMATION FOR EACH BLOCK — S603

CALCULATE ANGLE FROM DISTANCE INFORMATION DIFFERENCE FROM LEFT-SIDE ADJACENT BLOCK — S604

CORRECT LUMINANCE OF LEFT HALF PORTION OF TARGET BLOCK ACCORDING TO ANGLE — S605

CALCULATE ANGLE FROM DISTANCE INFORMATION DIFFERENCE FROM RIGHT-SIDE ADJACENT BLOCK — S606

CORRECT LUMINANCE OF RIGHT HALF PORTION OF TARGET BLOCK ACCORDING TO ANGLE — S607

CALCULATE ANGLE FROM DISTANCE INFORMATION DIFFERENCE FROM UPPER-SIDE ADJACENT BLOCK — S608

CORRECT LUMINANCE OF UPPER HALF PORTION OF TARGET BLOCK ACCORDING TO ANGLE — S609

CALCULATE ANGLE FROM DISTANCE INFORMATION DIFFERENCE FROM LOWER-SIDE ADJACENT BLOCK — S610

CORRECT LUMINANCE OF LOWER HALF PORTION OF TARGET BLOCK ACCORDING TO ANGLE — S611

ALL BLOCKS COMPLETELY CORRECTED? — S612

NO → MOVE CORRECTION TARGET BLOCK — S613

YES → END

FIG. 6

FIG. 7A

LD

OBJ

N

100

LED DISPLAY AREA

OBJECT AREA

FIG. 7B

FIG. 8

FIG. 9A

ANGLE CALCULATION

CORRECTION
TARGET BLOCK

FIG. 9B

CORRECTION
TARGET BLOCK

ANGLE CALCULATION

FIG. 9C

ANGLE CALCULATION

CORRECTION
TARGET BLOCK

FIG. 9D

CORRECTION
TARGET BLOCK

ANGLE CALCULATION

FIG. 10A

FIG. 10B

START

ACQUIRE IMAGE AND DISTANCE INFORMATION — S601

SEPARATE OBJECT AND LED DISPLAY AREA — S602

DIVIDE IMAGE FOR EACH BLOCK AND CALCULATE DISTANCE INFORMATION FOR EACH BLOCK — S603

CALCULATE AND NORMALIZE AVERAGE VALUE OF DISTANCE INFORMATION — S1101

CALCULATE CORRECTION VALUE FROM NORMALIZED AVERAGE VALUE OF CORRECTION TARGET BLOCK — S1102

CORRECT LUMINANCE VALUE OF CORRECTION TARGET BLOCK — S1103

ALL BLOCKS COMPLETELY CORRECTED? — S1104

NO → MOVE CORRECTION TARGET BLOCK — S613

YES

END

FIG. 11

## INTERNATIONAL SEARCH REPORT

| | International application No. |
|---|---|
| | **PCT/JP2024/012563** |

### A. CLASSIFICATION OF SUBJECT MATTER

*H04N 23/60*(2023.01)i; *H04N 5/222*(2006.01)i

FI: H04N23/60 500; H04N5/222 400

According to International Patent Classification (IPC) or to both national classification and IPC

### B. FIELDS SEARCHED

Minimum documentation searched (classification system followed by classification symbols)

H04N23/60; H04N5/222

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-140057 A (CANON KABUSHIKI KAISHA) 26 September 2022 (2022-09-26) paragraphs [0018]-[0027], [0099]-[0175], [0204]-[0227], fig. 1, 2, 24-26, 30-32, 38 | 1-2, 4-8, 10-14 |
| Y | paragraphs [0018]-[0027], [0099]-[0175], [0204]-[0227], fig. 1, 2, 24-26, 30-32, 38 | 3,9 |
| Y | WO 2014/119257 A1 (PANASONIC CORPORATION) 07 August 2014 (2014-08-07) paragraph [0069] | 3 |
| Y | JP 2015-033020 A (CANON KABUSHIKI KAISHA) 16 February 2015 (2015-02-16) paragraph [0035] | 3 |
| Y | JP 2011-028177 A (NIKON CORPORATION) 10 February 2011 (2011-02-10) paragraph [0082] | 9 |
| Y | JP 2010-067223 A (CANON KABUSHIKI KAISHA) 25 March 2010 (2010-03-25) paragraph [0051], fig. 9 | 9 |
| A | US 2022/0014728 A1 (BROMPTON TECHNOLOGY LTD.) 13 January 2022 (2022-01-13) the whole document, fig. 1-6 | 1-14 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/012563**

### C. DOCUMENTS CONSIDERED TO BE RELEVANT

| Category* | Citation of document, with indication, where appropriate, of the relevant passages | Relevant to claim No. |
|---|---|---|
| A | US 2017/0150067 A1 (SAMSUNG ELECTRONICS CO., LTD.) 25 May 2017 (2017-05-25) the whole document, fig. 1-22 | 1–14 |

Form PCT/ISA/210 (second sheet) (July 2022)

**INTERNATIONAL SEARCH REPORT**
Information on patent family members

International application No.

**PCT/JP2024/012563**

| Patent document cited in search report | | | Publication date (day/month/year) | Patent family member(s) | | | Publication date (day/month/year) |
|---|---|---|---|---|---|---|---|
| JP | 2022-140057 | A | 26 September 2022 | US 2022/0292691 A1 paragraphs [0099]-[0109], [0180]-[0256], [0285]-[0309], fig. 1, 2, 24-26, 30-32, 38 | | | |
| WO | 2014/119257 | A1 | 07 August 2014 | (Family: none) | | | |
| JP | 2015-033020 | A | 16 February 2015 | (Family: none) | | | |
| JP | 2011-028177 | A | 10 February 2011 | (Family: none) | | | |
| JP | 2010-067223 | A | 25 March 2010 | US 2010/0067791 A1 paragraph [0079], fig. 9 | | | |
| US | 2022/0014728 | A1 | 13 January 2022 | WO 2022/013191 A1 | | | |
|  |  |  |  | CN 116075882 A | | | |
| US | 2017/0150067 | A1 | 25 May 2017 | WO 2017/090837 A1 | | | |
|  |  |  |  | EP 3968625 A1 | | | |
|  |  |  |  | KR 10-2017-0060414 A | | | |
|  |  |  |  | CN 108141539 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220014728